# EUROPEAN PATENT APPLICATION

(11) **EP 2 144 478 A1**
(43) Date of publication of application: **13.01.2010**
(21) Application number: 08861276.7
(22) Date of filing: 03.12.2008
(51) Int. Cl.: H04W 88/02

(54) **CALLING INFORMATION PRESENTING METHOD, SYSTEM AND APPARATUS**

(30) Priority: 13.12.2007 CN 200710195731
(71) Applicant: Huawei Technologies Co., Ltd., Longgang District Shenzhen Guangdong 518129 (CN)
(72) Inventor: ZHOU, Wen, Shenzhen Guangdong 518129 (CN)
(74) Representative: Thun, Clemens
(86) International application number: PCT/CN2008/073321
(87) International publication number: WO 2009/076855

(57) **Abstract**

The present disclosure discloses a method, system and apparatus for presenting calling information. The method includes: receiving, by a calling MSC, a call request sent from a calling user; obtaining, by the calling MSC according to the call request, a calling name presentation service identification of the calling user; and sending, by the calling MSC, the calling name presentation service identification to a called MSC, enabling the called MSC to obtain calling name information from a calling name information server according to the calling name presentation service identification and send the calling name information to a called user. According to the disclosure, it is possible to send the calling name presentation service identification from the calling MSC to the called MSC, enabling the called MSC to request query of the calling name information of the calling user in a calling name information server according to the identification.

## Description

The present application claims priority to Chinese Patent Application No. 200710195731.6, entitled "Method, System and Apparatus for Presenting Calling Information", and filed with the Chinese Patent Office on December 13, 2007, the entire contents of which are herein incorporated by reference.

### FIELD OF TECHNOLOGY

The embodiments disclosed herein relate to the technical field of mobile communications, and more particularly to a method, system and apparatus for presenting calling information.

### BACKGROUND OF THE DISCLOSURE

Calling Name Presentation (CNAP) service, which is also referred to as Calling Name Card service or Calling Information Presentation service, is a novel value-added service. When a calling user dials the telephone number of a called user, a service system sends the calling name information such as a calling electronic name card, and greetings, etc. of the calling user to the called user to indicate who is calling. The Calling Name Presentation service is preset by the calling user, and when the calling user dials the telephone number of the called user, the system automatically sends the information preset by the calling user to the called user. The user may customize the calling name information according to different scenarios by setting different calling name information with regard to different called users, different time periods, or different regions.

The calling name presentation is different from caller ID display in that the caller ID display is for the switching system to send the calling number to the called terminal, and the calling number is directly displayed on the called terminal, or the name of the calling user stored in the phonebook of the called terminal is displayed: if the phonebook of the called terminal does not record the information of the caller, only the calling number will be displayed on the called terminal, and if the called terminal does not subscribe the service of caller ID presentation, even the calling number will not be displayed.

A method for realizing calling name presentation service was disclosed in an existing technology: when the calling party calls the called party, a Mobile Switching Centre (MSC) at the network side of the calling party sends a message to a Visitor Location Register (VLR) for obtaining the calling name card information, with identification information of the calling party carried in the message. Upon receiving the message, the VLR firstly obtains the name card information of the calling party that matches the identification in accordance with the identification of the calling party, and then returns the name card information of the calling- party to the MSC at the network side of the calling party by obtaining a calling name card information response. The MSC at the network side of the calling party sends an IAM message to an MSC at the network side of the called party, with the calling name card information carried in the message. Upon receiving the message, the MSC at the network side of the called party extracts the calling name card information, and sends the extracted information to the called terminal for display therein, so as to complete the value-added service.

However, the inventors of the present invention find at least the following problems in the existing technology during the process of implementing the existing technology.

In the existing technology, the stored calling name information is obtained at the calling MSC and is then transmitted over inter-MSC signaling, so that it is necessary for MSCs over the whole network (both the calling MSC and the called MSC) to support inter-MSC transmission of the calling name information, that is to say, the calling name information is set in a inter-MSC message at the calling MSC, and the calling name information is subsequently extracted from the message at the called MSC. If the MSCs over the whole network are to be provided with the functions of setting and extracting the calling name information, there must be excessive reconstruction of the network. Accordingly, application of such a scheme is liable to restriction.

### SUMMARY OF THE DISCLOSURE

Embodiments of the present disclosure provide a method, system and apparatus for presenting calling information, whereby a calling name presentation service identification of a calling user is sent from a calling MSC to a called MSC, to enable the called MSC to obtain a calling name information of the caller according to the received calling name presentation service identification of the calling user.

An embodiment of the present disclosure provides a calling information presentation method, including:
receiving, by a calling MSC, a call request sent from a calling user;
obtaining, by the calling MSC, according to the call request, a calling name presentation service identification of the calling user; and
sending, by the calling MSC, the calling name presentation service identification to a called MSC, so as to enable the called MSC to obtain calling name information from a calling name information server according to the calling name presentation service identification and send the calling name information to the called terminal.

Another embodiment of the present disclosure provides a calling information presentation system, including:
a calling name information server, adapted to store a correspondence relationship between a calling number and calling name information of a calling user, and send the calling name information of the calling user to a called MSC upon receiving a calling name information query request from the called MSC;
a calling MSC, adapted to receive a call request sent from the calling user, obtain a calling name presentation service identification of the calling user according to the call request, and send the calling name presentation service identification to the called MSC; and
the called MSC, adapted to receive the calling name presentation service identification sent from the calling MSC, obtain the calling name information from the calling name information server, and send the calling name information to a called user.

Still another embodiment of the present disclosure provides a calling name information server, including:
a correspondence relationship storing unit, adapted to store a correspondence relationship between a calling number and calling name information; and
a calling name information assigning unit, adapted to send the calling name information corresponding to a calling user to a called MSC upon receiving a calling name information query request from the called MSC.

Yet another embodiment of the present disclosure provides a calling MSC, including:
a call request receiving unit, adapted to receive a call request sent from a calling user;
a calling name presentation service identification obtaining unit, adapted to obtain a calling name presentation service identification of the calling user according to the call request; and
a calling name presentation service identification sending unit, adapted to send the calling name presentation service identification to a called MSC.

Still yet another embodiment of the present disclosure provides a called MSC, including:
a receiving unit, adapted to receive a calling name presentation service identification sent from a calling MSC;
a calling name information obtaining unit, adapted to obtain calling name information from a calling name information server according to the calling name presentation service identification; and
a calling name information sending unit, adapted to send the calling name information to the called terminal.

Compared with the existing technology, the embodiments of the present disclosure make it possible to transfer the calling name presentation service identification from the calling MSC to the called MSC, whereby the called MSC can request the calling name information server to query for the calling name information of the caller upon receiving the identification, query the calling name information corresponding to the calling number of the calling user from the calling name information server, and send the calling name information to the called user. Since it is not necessary to carry the calling name information in the message transmitted between the calling MSC and the called MSC, the calling MSC does not need to package the calling name information in the transmitted message, and the called MSC also does not need to extract the calling name information from the transmitted message. Accordingly, MSCs in the whole network do not have to be reconstructed and modified with respect to their configurations, and this facilitates the calling name presentation service to be deployed in local areas; moreover, the calling name presentation identification of the calling user is directly generated by the calling MSC, thereby improving the efficiency.

### BRIEF DESCRIPTION OF THE DRAWINGS

Fig. 1 is a networking diagram showing configuration of a calling name information presentation system according to an embodiment of the present disclosure;
Fig. 2 is a flowchart showing a method for implementing the calling name presentation service according to another embodiment of the present disclosure;
Fig. 3 is a flowchart showing a method for implementing the calling name presentation service according to still another embodiment of the present disclosure;
fig. 4 is a flowchart showing a method for implementing the calling name presentation service according to yet another embodiment of the present disclosure;
Fig. 5 is a flowchart showing a method for implementing the calling name presentation service according to yet still another embodiment of the present disclosure;
Fig. 6 is a flowchart showing a method for implementing the calling name presentation service according to still yet another embodiment of the present disclosure;
Fig. 7 is an architecture diagram showing configuration of a system for implementing the calling name presentation service according to an embodiment of the present disclosure;
Fig. 8 is an architecture diagram showing configuration of a calling MSC according to an embodiment of the present disclosure; and
Fig. 9 is an architecture diagram showing configuration of a called MSC according to an embodiment of the present disclosure.

### DETAILED DESCRIPTION OF THE EMBODIMENTS

Specific embodiments of the present disclosure are described further in detail below with reference to the accompanying drawings and examples.

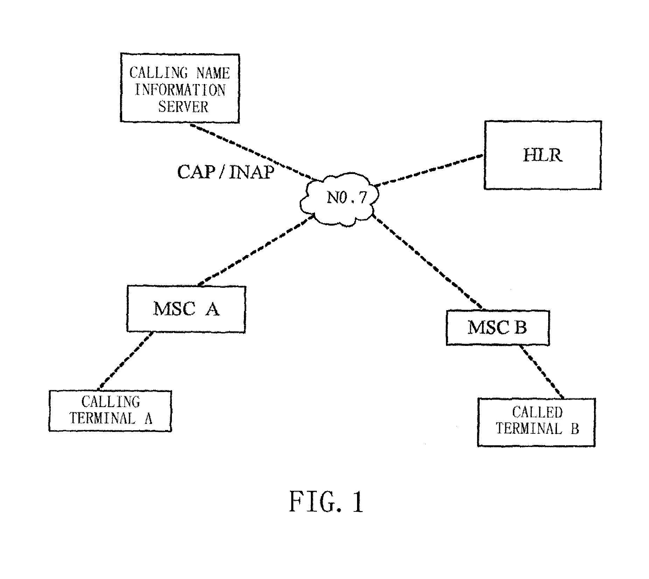

The networking diagram of the calling information presentation system according to an embodiment of the present disclosure is shown in Fig. 1, where a user A of the calling name presentation customizes a service at the network side, and stores his/her own calling information on a calling name information server, which may be a service control point (SCP). When the calling user A dials the telephone number of a called user B, a mobile service switching center (MSC) A, which is the calling MSC, notifies the calling name information server according to the service subscription information such as Originating Customized Applications for Mobile Network Enhanced Logic (CAMEL) Subscription Information (O-CSI) or Supplementary Service Code (SS-CODE) of the calling user A. The calling name information server returns a calling name presentation service identification of the calling user to the calling MSC A, the calling MSC A forwards the identification to an MSC B, which is a called MSC, and the called MSC B requests the calling name information server to query for the calling name information according to the identification, and sends the information to the user B. The service subscription information of the calling user A is stored on a Home Location Register (HLR), and the calling MSC A can obtain the service subscription information of the calling user A from the HLR. When the calling user A dials the telephone number of the called user B, the calling MSC A determiners the calling name information server of the calling user A according to the service subscription information of the calling user A, and notifies the calling name information server of the calling user A.

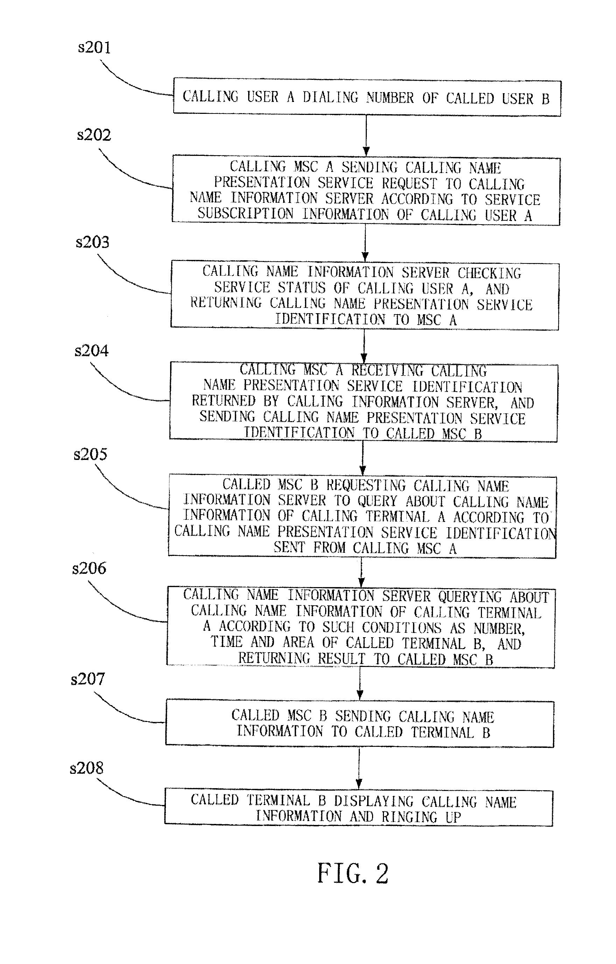

With reference to the system configuration according to another embodiment of the present disclosure, a process of a method for implementing the calling name presentation service according to another embodiment of the present disclosure as shown in Fig. 2 will be described as follows.

In step s201, the calling user A dials the number of the called user B, and sends a call request to the calling MSC A.

In step s202, the calling MSC A sends a calling name presentation service request, such as Initial Detect Point (IDP), to the calling name information server such as SCP according to the service subscription information such as O-CSI or SS-CODE of the calling user A.

In step s203, the calling name information server checks the service status of the calling user A, and returns the calling name presentation service identification to the MSC A. The way of returning the calling name presentation service identification may be to add the calling name presentation service identification anterior to the calling number, but it is not limited thereto. The calling name presentation service identification is an identification determined by the calling name information server and indicating that the calling user subscribes the calling name presentation service.

In step s204, the calling MSC A receives the calling name presentation service identification returned by the calling name information server, and sends the calling name presentation service identification to the called MSC B.

In step s205, the called MSC B requests the calling name information server to query for the calling name information of the calling user A according to the calling name presentation service identification sent from the calling MSC A.

In step s206. the calling name information server queries for the calling name information of the calling user A according to such conditions as the number, time and area of the called user B, and returns the result to the called MSC B.

In step s207, the called MSC B sends the calling name information to the called terminal B.

In step s208, the called terminal B displays the calling name information and rings up.

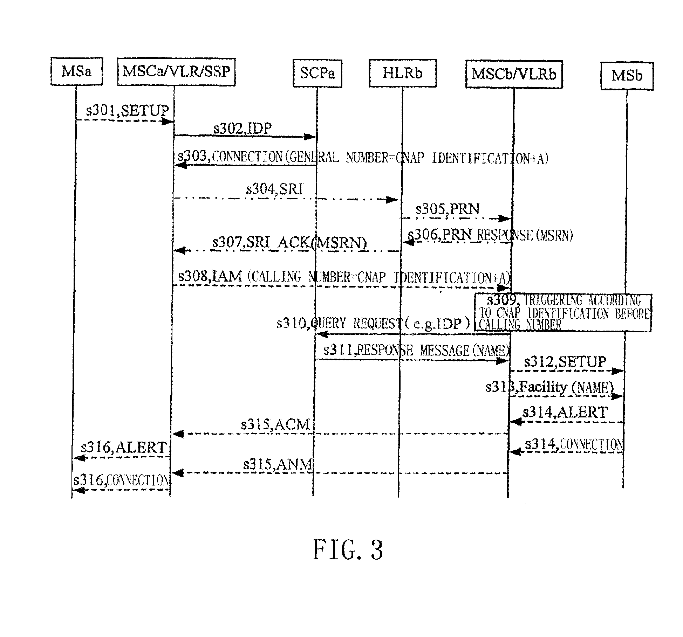

A process of information transmission of a method for implementing the calling name presentation service by a calling party according to another embodiment of the present disclosure is as shown in Fig. 3. An SCP is used in this embodiment as the calling name information server. The method is described as follows.

In step s301, a calling terminal MSa sends a call setup request SETUP to a calling MSCa.

In step s302, the calling MSCa triggers its intelligent service flow to its home SCPa.

In step s303, the SCPa checks that the calling user has been provided with the calling name presentation service, and adds the calling name presentation service identification anterior to the calling number in a connection message as sent down. The calling name presentation service identification may also be placed in other signaling elements.

In step s304, the calling MSCa sends an SRI request message to an HLRb requesting to obtain the roaming number of a called terminal MSb.

In step s305, the HLRb sends a PRN request message to a called MSCb.

In step s306, the called MSCb returns a PRN response message carrying the roaming number of the called terminal MSb to the HLRb.

In step s307, the HLRb returns the roaming number of the called terminal MSb to the calling MSCa in an SRI response message.

In step s308, the MSCa obtains the roaming number of the called terminal MSb, and sends an IAM message carrying the calling number added with the calling name presentation service identification to the called MSCb.

In step s309, the called MSCb is triggered according to a CNAP identification anterior to the calling number.

In step s310, the called MSCb queries for the content of the calling name information of the calling user at the SCPa.

In step s311, the SCPa searches and acquires the calling name information set by the calling user according to the current circumstance (such as the called number, time period, and area), and returns the acquired information to the MSCb in a response message.

In step s312, the MSCb firstly sends a SETUP (call setup) message to the called terminal MSb.

In step s313: the calling name information is transferred to the called terminal MSb in a facility message. The facility may also be transferred to the called terminal as a signaling element of the SETUP message.

In step s314, the called terminal MSb displays the calling name information and rings up, and sends an ALERT message and a connection message to the called MSCb.

In step s315, the called MSCb sends an ACM message and an ANM message, respectively, to the calling MSCa.

In step s316, the calling MSCa sends the ALERT message and the connection message, respectively, to the calling terminal MSa to set up a call therebetween.

In the embodiments as shown in Figs. 2 and 3, by sending the calling name presentation service identification of the calling user from the calling MSC to the called MSC, and by the called MSC querying the calling name information server for the calling name information of the caller according to the received calling name presentation service identification of the calling user, it is made possible the transmission of the calling name presentation service identification from the calling MSC to the called MSC, whereby the called MSC requests the calling name information server to query for the calling name information of the calling user according to the identification, so that it is not necessary to reconstruct the calling MSC and to modify the configuration of the calling MSC when the calling user modifies information, as it suffices to make the modification in the calling name information server, thereby facilitating the calling name presentation service to be deployed in local areas.

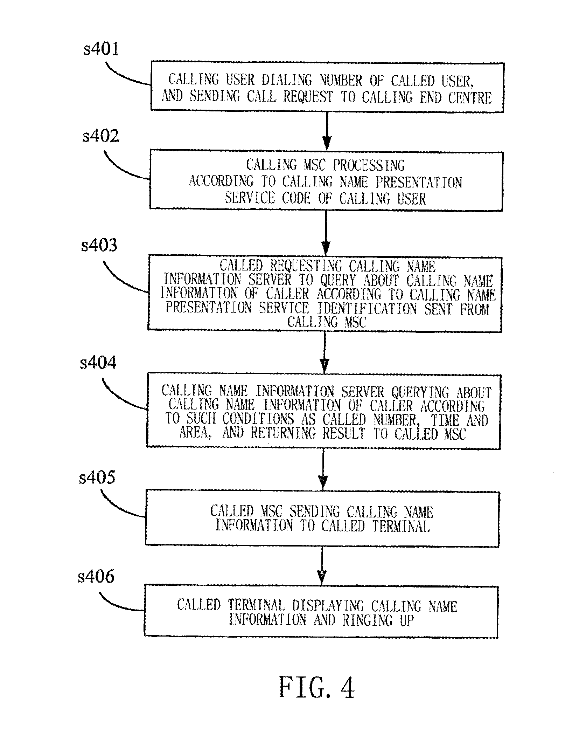

A process of a method of calling name presentation service according to another embodiment of the present disclosure is as shown in Fig. 4, wherein a calling name service presentation code is processed to enable a calling MSC to directly generate a calling name presentation identification of a calling user, thereby improving the efficiency of the service. The method is described as follows.

In step s401, the calling user dials the number of a called user, and sends a call request to the calling MSC.

In step s402, the calling MSC processes a calling name presentation service code (SS-CODE) of the calling user in the following modes, The first mode is to convert the SS-CODE into a calling name presentation service identification and add it anterior to the calling number, and alternatively it is possible to place the calling name presentation service identification in other signaling elements, and then send it to a called MSC. The second mode is to directly take the SS-CODE as the calling name presentation service identification, and transfer it to the called MSC by carrying it in an inter-MSC signaling.

In step s403, the called MSC requests a calling name information server to query for (such as IDP message) the calling name information of the caller according to the calling name presentation service identification sent from the calling MSC.

In step s404, the calling name information server queries for the calling name information of the caller according to such conditions as the called number, time and area, and returns the result to the called MSC.

In step s405, the called MSC sends the calling name information to a called terminal.

In step s406, the called terminal displays the calling name information and rings up.

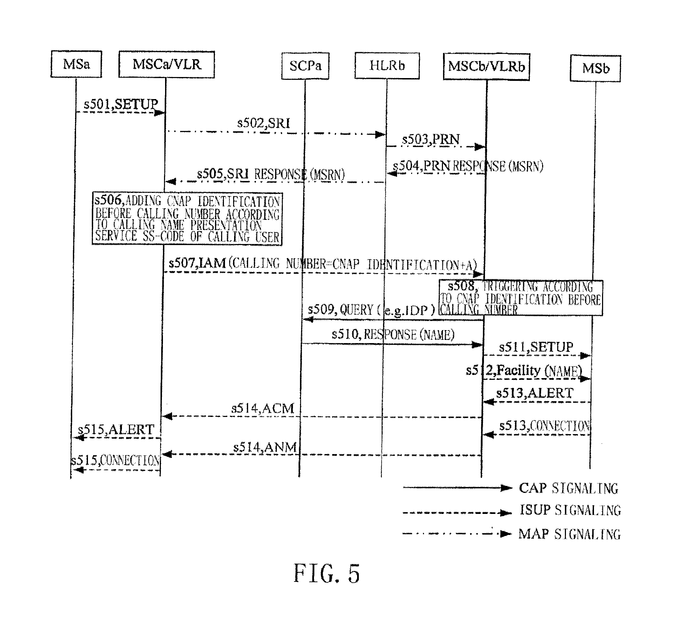

According to another embodiment of the present disclosure, the process of data information transmission when the first mode of processing the calling name presentation service code in the embodiment as shown in Fig. 4 is as shown in Fig. 5. The process is described as follows.

In step s501, a calling terminal MSa sends a call setup request SETUP to a calling MSCa.

In step s502, the calling MSCa sends an SRI request message to the HLRb, requesting to obtain the roaming number of a called terminal MSb.

In step s503, the HLRb sends a PRN request message to a called MSCb.

In step s504, the called MSCb returns a PRN response message carrying the roaming number of the called MSb to the HLRb.

In step s505, the HLRb returns the roaming number of the called terminal MSb to the calling MSCa in an SRI response message.

In step s506, the calling MSCa obtains the roaming number of the called terminal MSb, converts the calling name presentation service code SS-CODE of the calling user into the calling name presentation service identification, and adds the calling number presentation service identification anterior to the calling number.

In step s507, the calling MSCa sends an IAM message to the called MSCb, with the calling number added with the calling name presentation service identification carried in the IAM message.

In step s508, the called MSCb is triggered according to a CNAP identification anterior to the calling number.

In step s509, the called MSCb queries for the content, such as the IDP message, of the calling name information of the calling terminal MSa at an SCPa.

In step s510, the SCPa searches and acquires the calling name information set by the MSa of the calling terminal according to the current circumstance (such as the called number, time period, and area), and returns the acquired information to the MSCb in a response message.

In step s511, the MSCb firstly sends a SETUP (call setup) message to the called terminal MSb.

In step s512, the MSCb transfers the calling name information to the called terminal MSb in a facility message, which may also be transferred to the terminal as a signaling element of the SETUP message.

In step s513, the called terminal MSb displays the calling name information and rings up, and sends an ALERT message and a connection message to the called MSCb.

In step s514, the called MSCb sends an ACM message and an ANM message, respectively, to the calling MSCa.

In step s515, the calling MSCa sends the ALERT message and the connection message, respectively, to the calling terminal MSa to set up a call.

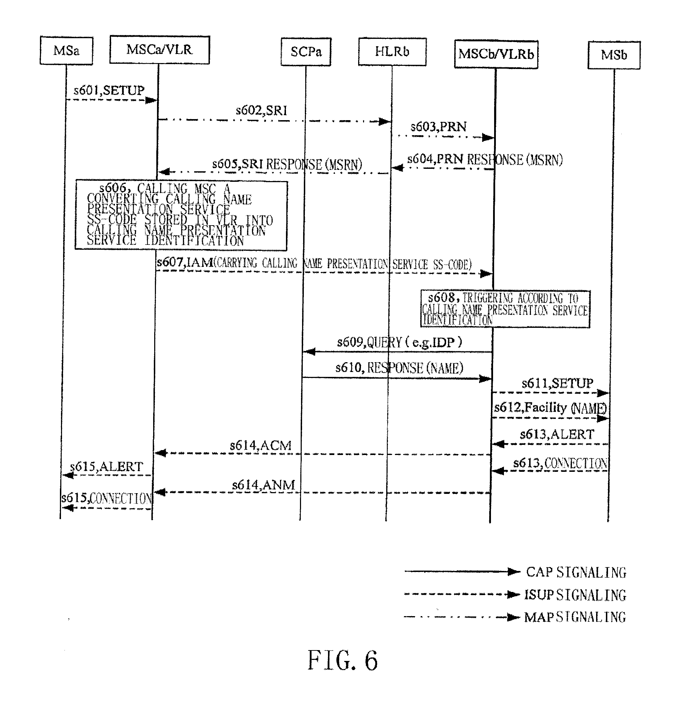

According to another embodiment of the present disclosure, a process of data information transmission when the second mode of processing the calling name presentation service code in the embodiment as shown in Fig. 4 is as shown in Fig. 6. The process is described as follows.

In step s601, a calling terminal MSa sends a call setup request SETUP to a calling MSCa.

In step s602, the calling MSCa sends an SRI request message to an HLRb, requesting to obtain the roaming number of a called terminal MSb.

In step s603, the HLRb sends a PRN request message to a called MSCb.

In step s604, the called MSCb returns a PRN response message to the HLRb, with the roaming number of the called terminal MSb carried in the message.

In step s605, the HLRb returns the roaming number of the called terminal MSb to the calling MSCa in an SRI response message.

In step s606, the calling MSCa directly takes a calling name presentation service code SS-CODE stored in a VLR as the calling name presentation service identification.

In step s607, the calling MSCa sends an IAM message carrying the calling name presentation service identification to the called MSCb.

In step s608, the called MSCb is triggered according to the calling name presentation service identification.

In step s609, the called MSCb queries for the content of the calling name information of the calling user at an SCPa.

In step s610. the SCPa searches and acquires the calling name information set by the calling user according to the current circumstance (such as the called number, time period, and area), and returns the acquired information to the MSCb in a response message.

In step s611, the MSCb sends a SETUP (call setup) message to the called terminal MSb.

In step s612, the MSCb transfers the calling name information to the called terminal MSb in a facility message, which may also be transferred to the terminal as a signaling cell of the SETUP message.

In step s613, the called terminal MSb displays the calling name information and rings up, and sends an ALERT message and a connection message to the called MSCb.

In step s614, the called MSCb sends an ACM message and an ANM message, respectively, to the calling MSCa.

In step s615, the calling MSCa sends the ALERT message and the connection message, respectively, to the calling terminal MSa to set up a call.

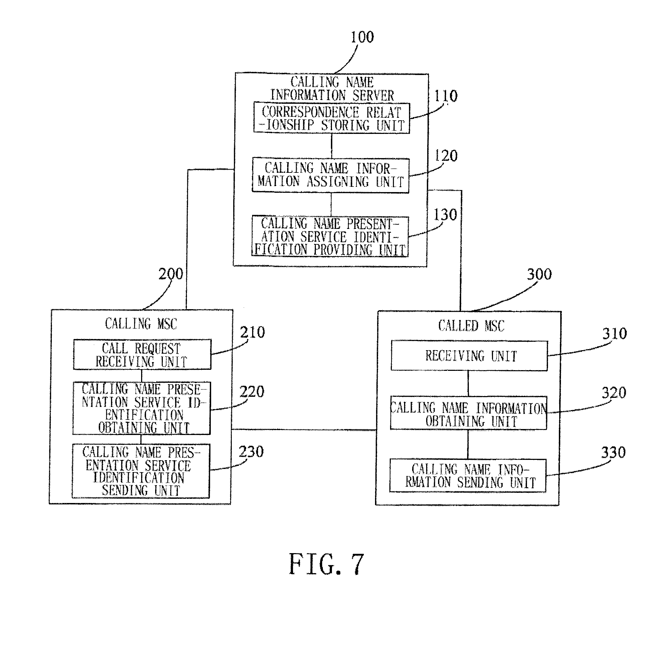

An embodiment of the present disclosure further provides a calling information presentation system, which, as shown in Fig. 7, includes:
a calling name information server 100, adapted to store a correspondence relationship between a calling number and calling name information of a calling user, and send the calling name information corresponding to the calling user to a called MSC upon receiving a calling name information query request from the called MSC;
a calling MSC 200, adapted to receive a call request sent from the calling user, obtain a calling name presentation service identification of the calling user according to the request, and send the calling name presentation service identification to the called MSC; and
a called MSC 300, adapted to receive the calling name presentation service identification sent from the calling MSC, obtain a calling name information from the calling name information server, and send the calling name information to a called user.

The calling name information server 100 further includes:
a correspondence relationship storing unit 110, adapted to store a correspondence relationship between the calling number and the calling name information of the calling user;
a calling name information assigning unit 120, adapted to send the calling name information corresponding to the calling user to the called MSC upon receiving the calling name information query request from the called MSC; and
a calling name presentation service identification providing unit 130, adapted to query the corresponding calling name presentation service identification according to a calling name presentation service request sent from the calling MSC, and return the calling name presentation service identification to the calling MSC.

The calling MSC 200 further includes:
a call request receiving unit 210, adapted to receive the call request sent from the calling user;
a calling name presentation service identification obtaining unit 220, adapted to obtain the calling name presentation service identification of the calling user according to the call request; and
a calling name presentation service identification sending unit 230, adapted to send the calling name presentation service identification to the called MSC.

The called MSC 300 further includes:
a receiving unit 310, adapted to receive the calling name presentation service identification sent from the calling MSC;
a calling name information obtaining unit 320, adapted to obtain the calling name information from the calling name information server according to the calling name presentation service identification; and
a calling name information sending unit 330, adapted to send the calling name information to a called user terminal for displaying the information thereon.

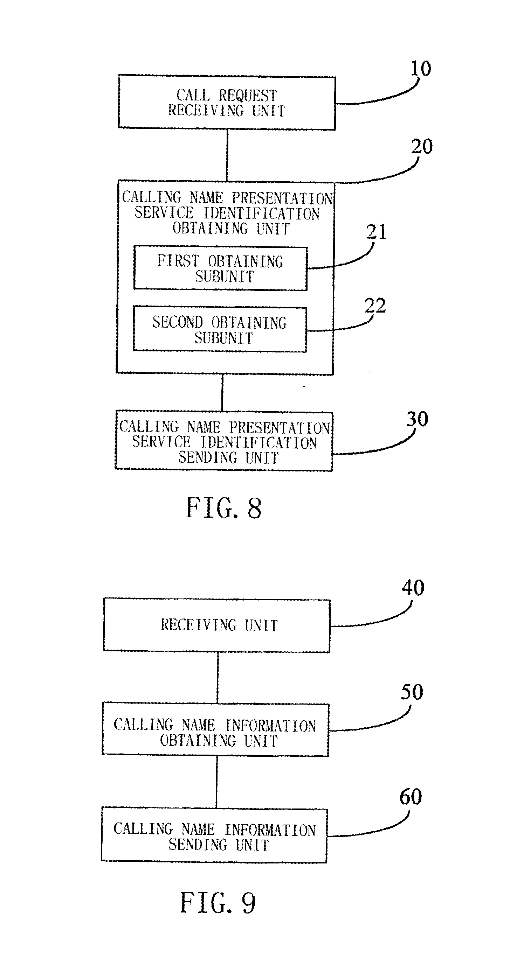

An embodiment of the present disclosure provides a calling MSC, which, as shown in Fig. 8, includes:
a call request receiving unit 10, adapted to receive a call request sent from a calling user;
a calling name presentation service identification obtaining unit 20, adapted to obtain a calling name presentation service identification of the calling user according to the call request; and
a calling name presentation service identification sending unit 30, adapted to send the calling name presentation service identification to a called MSC.

The calling name presentation service identification obtaining unit 20 further includes:
a first obtaining subunit 21, adapted to send a calling name presentation request to a calling name information server to obtain the corresponding calling name presentation service identification; and/or
a second obtaining subunit 22, adapted to convert a calling name presentation service code into the calling name presentation service identification or directly carry the calling name presentation service code as the calling name presentation service identification in an inter-centre signaling.

An embodiment of the present disclosure provides a called MSC, which, as shown in Fig. 9, includes:
a receiving unit 40, adapted to receive a calling name presentation service identification sent from a calling MSC;
a calling name information obtaining unit 50, adapted to obtain a calling name information from a calling name information server according to the calling name presentation service identification; and
a calling name information sending unit 60, adapted to send the calling name information to a called user.

According to the embodiments of the present disclosure, it is made possible the transmission of the calling name presentation service identification from the calling MSC to the called MSC, whereby the called MSC requests the calling name information server to query for the calling name information of the caller according to the identification. No reconstruction and modification of configurations are needed, thereby facilitating the calling name presentation service to be deployed in local areas. Moreover, the calling MSC directly generates the calling name presentation identification of the calling user, thereby improving the efficiency.

As can be clearly seen to persons skilled in the art with reference to the above description of the embodiments, that the present disclosure can be carried out by means of software with the indispensable hardware platform, and can of course be carried out by hardware alone, but the former mode is preferred in many instances. Based on such understanding, the technical solution of the present disclosure or part of the disclosure that makes contribution to the existing technology can be essentially embodied in the form of a software product. Such a computer software product is stored in a storage medium and includes instructions to enable a computer device (such as a personal computer, a server, or a network device) to execute the methods as recited in the various embodiments of the present disclosure.

The above description is directed merely to preferred embodiments of the present disclosure. It is appreciated to those ordinarily skilled in the art that it is also possible to make various variations and modifications to the present disclosure without departing from the principles of the present disclosure, and all such variations and modifications will fall within the protection scope of the present disclosure.

## Claims

1. A method for presenting calling information, comprising:
receiving, by a calling MSC, a call request sent from a calling user;
obtaining, by the calling MSC according to the call request, a calling name presentation service identification of the calling user; and
sending, by the calling MSC, the calling name presentation service identification to a called MSC, so that the called MSC obtains calling name information from a calling name information server according to the calling name presentation service identification and sends the calling name information to a called terminal.

2. The method according to claim 1, further comprising:
obtaining, by the calling MSC, service subscription information of the calling user;
wherein the process of obtaining, by the calling MSC according to the call request, the calling name presentation service identification of the calling user comprises:
sending, by the calling MSC according to the service subscription information, a calling name presentation service request to the calling name information server; and
receiving, by the calling MSC, the calling name presentation service identification returned by the calling name information server.

3. The method according to claim 1, further comprising:
obtaining, by the calling MSC, the service subscription information of the calling user, which is specifically a calling name presentation service code;
wherein the process of obtaining, by the calling MSC according to the call request, the calling name presentation service identification of the calling user comprises:
converting the calling name presentation service code into the calling name presentation service identification, or directly taking the calling name presentation service code as the calling name presentation service identification, and carrying the calling name presentation service identification in an inter-MSC signaling, by the calling MSC.

4. The method according to claim 2, wherein the calling name presentation service identification is an identification determined by the calling name information server and indicating that the calling user subscribes the calling name presentation service.

5. The method according to any one of claims 1 to 4, wherein the process of obtaining, by the called MSC, the calling name information from the calling name information server comprises:
sending, by the called MSC, a calling name information query request, in which a calling number and a called number is carried, to the calling name information server; and
querying the calling name information of the corresponding calling user according to the calling number and the called number, and returning the calling name information to the called MSC in a calling name information query response, by the calling name information server.

6. A calling information presentation system, comprising:
a calling name information server, adapted to store a correspondence relationship between a calling number and calling name information of a calling user, and send the calling name information of the calling user to a called MSC upon receiving a calling name information query request from the called MSC;
a calling MSC, adapted to receive a call request sent from the calling user, obtain a calling name presentation service identification of the calling user according to the call request, and send the calling name presentation service identification to the called MSC; and
the called MSC, adapted to receive the calling name presentation service identification sent from the calling MSC, obtain a calling name information from the calling name information server, and send the calling name information to a called user.

7. The calling information presentation system according to claim 6, wherein the calling name information server further comprises:
a correspondence relationship storing unit, adapted to store the correspondence relationship between the calling number and the calling name information of the calling user; and
a calling name information assigning unit, adapted to send the calling name information of the calling user to the called MSC upon receiving the calling name information query request from the called MSC.

8. The calling information presentation system according to claim 7, wherein the calling name information server further comprises:
a calling name presentation service identification providing unit, adapted to query the corresponding calling name presentation service identification according to a calling name presentation service request sent from the calling MSC, and return the calling name presentation service identification to the calling MSC.

9. The calling information presentation system according to claim 6, wherein the calling MSC further comprises:
a call request receiving unit, adapted to receive the call request sent from the calling user;
a calling name presentation service identification obtaining unit, adapted to obtain the culling name presentation service identification of the calling user according to the call request; and
a calling name presentation service identification sending unit, adapted to send the calling name presentation service identification to the called MSC.

10. The calling information presentation system according to claim 6, wherein the called MSC, further comprises:
a receiving unit, adapted to receive the calling name presentation service identification sent from the calling MSC;
a calling name information obtaining unit, adapted to obtain the calling name information from the calling name information server according to the calling name presentation service identification; and
a calling name information sending unit, adapted to send the calling name information to a called user terminal so as to display the calling name information on the called user terminal.

11. A calling name information server, comprising:
a correspondence relationship storing unit, adapted to store a correspondence relationship between a calling name presentation service identification and calling name information; and
a calling name information assigning unit, adapted to send the calling name information corresponding to a calling user to a called MSC upon receiving a calling name information query request from the called MSC.

12. The calling name information server according to claim 11, further comprising:
a calling name presentation service identification providing unit, adapted to query the corresponding calling name presentation service identification according to a calling name presentation service request sent from a calling MSC, and return the calling name presentation service identification to the calling MSC.

13. A calling MSC, comprising:
a call request receiving unit, adapted to receive a call request sent from a calling user;
a calling name presentation service identification obtaining unit, adapted to obtain a calling name presentation service identification of the calling user according to the call request; and
a calling name presentation service identification sending unit, adapted to send the calling name presentation service identification to a called MSC.

14. The calling MSC according to claim 13, wherein the calling name presentation service identification obtaining unit further comprises:
a first obtaining subunit, adapted to send a calling name presentation request to a calling name information server to obtain the corresponding calling name presentation service identification.

15. The calling MSC according to claim 13, wherein the calling name presentation service identification obtaining unit further comprises:
a second obtaining subunit, adapted to convert a calling name presentation service code into the calling name presentation service identification or directly take the calling name presentation service code as the calling name presentation service identification.

16. A called MSC, comprising:
a receiving unit, adapted to receive a calling name presentation service identification sent from a calling MSC;
a calling name information obtaining unit, adapted to obtain calling name information from a calling name information server according to the calling name presentation service identification; and
a calling name information sending unit, adapted to send the calling name information to a called user.
